# EUROPÄISCHE PATENTANMELDUNG

(11) **EP 1 583 194 A2**
(43) Veröffentlichungstag der Anmeldung: **05.10.2005**
(21) Anmeldenummer: 05101138.5
(22) Anmeldetag: 15.02.2005
(51) Int. Cl.: H02G 3/12

(54) **Aufputzgehäuse**

(30) Priorität: 04.03.2004 DE 102004010708
(71) Anmelder: SIEMENS AKTIENGESELLSCHAFT, 80333 München (DE)
(72) Erfinder: Belmer, Markus, 93055, Regensburg (DE); Huttner, Roland, 93133, Burglengenfeld (DE)

(57) **Zusammenfassung**

Die Erfindung betrifft ein Aufputzgehäuse (1) mit wenigstens einer Aufnahmeöffnung (2) für wenigstens ein elektrisches Installationsgerät (3). Erfindungsgemäß ist wenigstens eine Auflagefläche (4,10), die zur Auflage wenigstens eines Geräteeinsatzes (7) eines Unterputz-Installationsgerätes (3) ausgebildet. Das erfindungsgemäße Aufputzgehäuse ist für den Einbau verschiedener Unterputz-Installationsgeräte geeignet, wodurch die Designvielfalt erhöht wird. Die Erfindung betrifft weiterhin ein Aufputzgehäuse (1) mit wenigstens einer Aufnahmeöffnung (2) für wenigstens ein elektrisches Unterputz-Installationsgerät (3), das einen Geräteeinsatz (7) und einen Abdeckrahmen (9) umfasst, und mit wenigstens einer Auflagefläche (4,10), die zur Auflage wenigstens eines Geräteeinsatzes (7) ausgebildet ist, wobei zwischen dem Geräteeinsatz (7) und der Auflagefläche (4) ein Dichtmittel (8) anordbar ist, das an den einsetzbaren Geräteeinsatz (7) und an die Auflagefläche (4) angepasst ist. Ein derartiges Aufputzgehäuse ist gegen Spritzwasser geschützt.

## Beschreibung

Die Erfindung betrifft ein Aufputzgehäuse mit wenigstens einer Aufnahmeöffnung für wenigstens ein elektrisches Unterputz-Installationsgerät.

Ein derartiges Aufputzgehäuse ist beispielsweise jeweils für sich aus dem deutschen Gebrauchsmuster DE 80 20 040 U1 und dem deutschen Patent DE 31 00 528 C2 bekannt.

Das bekannte Aufputzgehäuse weist eine Abdeckung auf und ist Bestandteil eines elektrischen Installationsgehäuses (Schalter, Steckdose oder dergleichen) für Aufputzmontage. Das Aufputzgehäuse ist an das betreffende Aufputz-Installationsgerät bzw. an den betreffenden Installationsgeräteeinsatz anzupassen. Für verschiedene Programme von Aufputz-Installationsgeräten sind damit verschiedene Aufputzgehäuse erforderlich. Darüber hinaus weisen die Aufputz-Installationsgeräte aufgrund ihres Designs einen mehr technischen Eindruck auf.

Aufgabe der vorliegenden Erfindung ist es deshalb, ein Aufputzgehäuse der eingangs genannten Art zu schaffen, das für den Einbau verschiedener Unterputz-Installationsgeräte geeignet ist, wobei die Designvielfalt erhöht werden soll.

Der Erfindung liegt weiterhin die Aufgabe zugrunde, ein Aufputzgehäuse der eingangs genannten Art zu schaffen, das gegen Spritzwasser geschützt ist.

Die Aufgabe, ein Aufputzgehäuse zu schaffen, das für den Einbau verschiedener Unterputz-Installationsgeräte geeignet ist, wird erfindungsgemäß durch ein Aufputzgehäuse gemäß Anspruch 1 gelöst. Die Aufgabe, ein gegen Spritzwasser geschütztes Aufputzgehäuse zu schaffen, wird durch ein Aufputzgehäuse gemäß Anspruch 5 gelöst. Vorteilhafte Ausgestaltungen der Erfindung sind jeweils Gegenstand von weiteren Ansprüchen.

Das Aufputzgehäuse gemäß Anspruch 1 weist wenigstens eine Aufnahmeöffnung für wenigstens ein elektrisches Installationsgerät auf. Erfindungsgemäß umfasst das Aufputzgehäuse wenigstens eine Auflagefläche, die zur Auflage wenigstens eines Geräteeinsatzes eines Unterputz-Installationsgerätes ausgebildet ist.

Das Aufputzgehäuse nach Anspruch 1 ermöglicht aufgrund der erfindungsgemäßen Auflagefläche die Montage von Unterputz-Installationsgeräten verschiedener Programme. Aufputz-Installationsgeräte können damit auf einfache Weise im Design an bereits vorhandene Unterputz-Installationsgeräte angepasst werden. Um diese "Designvereinheitlichung" mit bereits vorhandenen Unterputz-Installationsgeräten zu erreichen, ist es nunmehr nicht mehr erforderlich, für jedes Unterputz-Installationsgeräte-Programm eigene Aufputzgehäuse zu entwickeln und zu bevorraten. Hierdurch kann die Typenanzahl der Aufputzgehäuse deutlich reduziert werden, woraus Einsparungen bei den Werkzeugkosten und höhere Stückzahlen je Gehäusetyp resultieren.

Bei einer Ausgestaltung gemäß Anspruch 2 ist wenigstens eine Auflagefläche zumindest teilweise entlang der Aufnahmeöffnung angeordnet. Der Einbau eines Unterputz-Installationsgerätes ist in diesem Fall einfach ausführbar.

Bei einem doppelwandig ausgeführten Aufputzgehäuse, wie in Anspruch 3 beschrieben, ist es besonders vorteilhaft, wenn die Stirnseite der Gehäusedoppelwand die Auflagefläche bildet. Das Kunststoffspritzwerkzeug kann einerseits bei einer doppelwandigen Gehäuseausführung einfacher gestaltet werden und andererseits ist der Einbau besonders einfach ausführbar.

Alternativ oder zusätzlich zur Ausgestaltung nach Anspruch 2 ist gemäß Anspruch 4 auch eine Variante möglich, bei der wenigstens eine Auflagefläche von zumindest einem Steg gebildet ist. Derartige Ausführungsformen wird man bevorzugt bei Aufputzgehäusen mit mehr als einem Unterputz-Geräteeinsatz benutzen.

Das Aufputzgehäuse nach Anspruch 5 weist erfindungsgemäß wenigstens eine Aufnahmeöffnung für wenigstens ein elektrisches Unterputz-Installationsgerät auf, das einen Geräteeinsatz und einen Abdeckrahmen umfasst, sowie wenigstens einer Auflagefläche , die zur Auflage wenigstens eines Geräteeinsatzes ausgebildet ist, wobei zwischen dem Geräteeinsatz und der Auflagefläche ein Dichtmittel anordbar ist, das an den einsetzbaren Geräteeinsatz und an die Auflagefläche angepasst ist. Ein derart ausgeführtes Aufputzgehäuse ist gegen Spritzwasser geschützt. Schalter, die in das Aufputzgehäuse nach Anspruch 5 einbaubar sind, sind beispielsweise dem deutschen Gebrauchsmuster DE 89 05 071 U1 und aus der deutschen Patentanmeldung DE 102 34 727 A1 bekannt.

Bei einer Ausgestaltung gemäß Anspruch 6 ist wenigstens eine Auflagefläche zumindest teilweise entlang der Aufnahmeöffnung angeordnet. Der Einbau eines Unterputz-Installationsgerätes ist in diesem Fall einfach ausführbar.

Bei einem doppelwandig ausgeführten Aufputzgehäuse, wie in Anspruch 7 beschrieben, ist es besonders vorteilhaft, wenn die Stirnseite der Gehäusedoppelwand die Auflagefläche bildet. Das Kunststoffspritzwerkzeug kann einerseits bei einer doppelwandigen Gehäuseausführung einfacher gestaltet werden und andererseits ist der Einbau besonders einfach ausführbar.

Alternativ oder zusätzlich zu einer Ausführungsform nach Anspruch 6 ist gemäß Anspruch 8 auch eine Variante möglich, bei der wenigstens eine Auflagefläche von zumindest einem Steg gebildet ist. Derartige Ausführungsformen wird man bevorzugt bei Aufputzgehäusen mit mehr als einem Unterputz-Geräteeinsatz benutzen.

Nachfolgend wird ein Ausführungsbeispiel der Erfindung anhand einer Explosionsdarstellung näher erläutert.

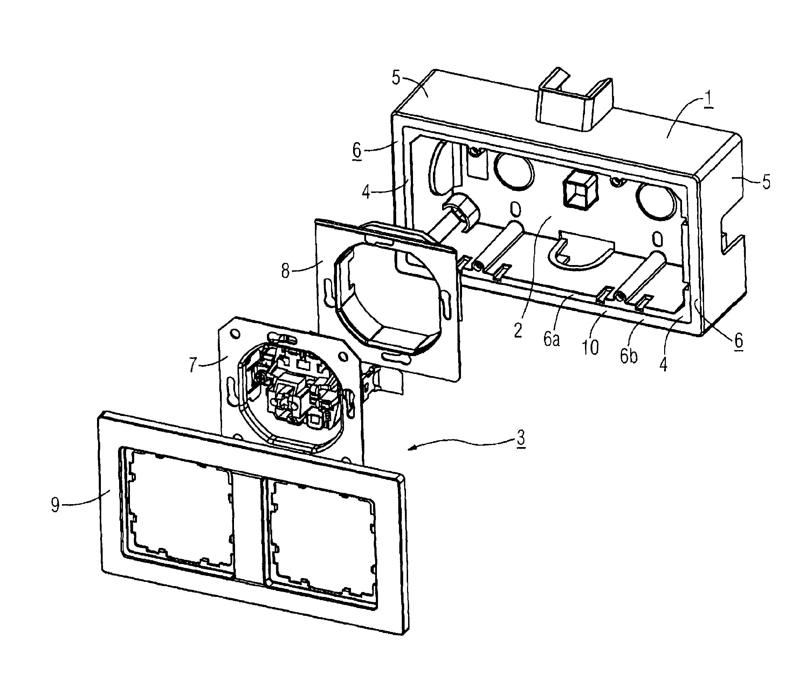

In der Zeichnung ist mit 1 ein Aufputzgehäuse bezeichnet. Das Aufputzgehäuse 1 weist erfindungsgemäß eine Aufnahmeöffnung 2 für wenigstens ein elektrisches Unterputz-Installationsgerät 3 auf. Weiterhin weist das Aufputzgehäuse 1 erfindungsgemäß eine Auflagefläche 4 auf, die zur Auflage wenigstens eines Unterputz-Installationsgerätes 3 ausgebildet ist. Im gezeigten Ausführungsbeispiel ist das Aufputzgehäuse 1 für die Aufnahme von zwei Unterputz-Installationsgeräten ausgeführt (in der Zeichnung ist nur ein Unterputz-Installationsgerät gezeigt). Im Rahmen der Erfindung können jedoch auch Einfach- und Mehrfachgehäuse (z. B. Fünffachgehäuse) realisiert werden.

Im dargestellten Ausführungsbeispiel weist das Aufputzgehäuse 1 eine Gehäusedoppelwand 5 auf, dessen Stirnfläche 6 gestuft ist, also einen tiefer liegenden Teil 6a und einen höher liegenden Teil 6b bildet. Der tiefer liegende Teil 6a der Stirnfläche 6 ist als Auflagefläche 4 für einen Geräteeinsatz 7 des Unterputz-Installationsgerätes 3 ausgebildet. Die Auflagefläche 4 umschließt damit die Aufnahmeöffnung 2 vollständig.

Zwischen dem Geräteeinsatz 7 des Unterputz-Installationsgerätes 3 und der Auflagefläche 4 ist ein Dichtmittel 8 angeordnet, das an den einsetzbaren Geräteeinsatz 7 und an die Auflagefläche 4 angepasst ist.

Bei dem in der Zeichnung dargestellten Aufputzgehäuse 1 ist die Montage des Unterputz-Installationsgerätes 3 auf einfache weise möglich. Nach der Befestigung des Aufputzgehäuses 1 mittels Schrauben und Dübel an der Hauswand wird das Dichtmittel 8 auf den Geräteeinsatz 7 aufgesteckt. Anschließend wird der Geräteeinsatz 7 zusammen mit dem Dichtmittel 8 auf die Auflagefläche 4 aufgesetzt und mit dem Aufputzgehäuse 1 verschraubt. Die Montage des Unterputz-Installationsgerätes 3 im Aufputzgehäuse 1 wird mit der Montage eines Abdeckrahmens 9 und eines Funktionsteils (z. B. Steckdose) bzw. eines Bedienteils (z. B. Schalter- oder Tasterwippe) abgeschlossen. Der Abdeckrahmen 9 liegt hierbei sowohl auf dem Geräteeinsatz 7 als auch auf dem höher liegenden Teil 6b der Stirnfläche 6 auf. Damit bildet im gezeigten Ausführungsbeispiel die Stirnfläche 6 nicht nur (mit ihrem tiefer liegenden Teil 6a) die Auflagefläche 4 für den Geräteeinsatz 7 des Unterputz-Installationsgerätes 3 sondern auch (mit ihrem höher liegenden Teil 6b) eine Auflagefläche 10 für den Abdeckrahmen 9 des Unterputz-Installationsgerätes 3. Nach Abschluss der Montage bilden das Aufputzgehäuse 1 und das Unterputz-Installationsgerät 3 eine gegen Spritzwasser geschützte Installationseinheit.

Die doppelwandige Ausführung des Aufputzgehäuses 1 mit einer stufigen Ausbildung der Stirnfläche 6 wirkt sich positiv auf die Wirkung des Dichtmittels 8 aus. Weiterhin ist es durch die Gehäusedoppelwand 5 auf einfache Weise möglich, Kabel-, Kanal- oder Blindnippel entsprechend wasserdicht auszuführen.

## Patentansprüche

1. Aufputzgehäuse (1) mit wenigstens einer Aufnahmeöffnung (2) für wenigstens ein elektrisches Unterputz-Installationsgerät (3), das einen Geräteeinsatz (7) und einen Abdeckrahmen (9) umfasst, und mit wenigstens einer Auflagefläche (4,10), die zur Auflage wenigstens eines Geräteeinsatzes (7) ausgebildet ist, wobei die Auflagefläche (4,10) sowohl auf minimale Außenabmessungen als auch auf maximale Außenabmessungen verschiedener Abdeckrahmen (9) von Unterputz-Installationsgeräteprogrammen abgestimmt ist.

2. Aufputzgehäuse (1) nach Anspruch 1, **dadurch gekennzeichnet, dass** wenigstens eine Auflagefläche (4,10) zumindest teilweise entlang der Aufnahmeöffnung (2) angeordnet ist.

3. Aufputzgehäuse (1) nach Anspruch 1 oder 2, **gekennzeichnet, durch** eine doppelwandige Gehäuseausführung, wobei die Stirnfläche (6) der Gehäusedoppelwand (5) die Auflagefläche (4,10) bildet.

4. Aufputzgehäuse (1) nach einem der Ansprüche 1 bis 3, **dadurch gekennzeichnet, dass** wenigstens eine Auflagefläche von zumindest einem Steg gebildet ist.

5. Aufputzgehäuse (1) mit wenigstens einer Aufnahmeöffnung (2) für wenigstens ein elektrisches Unterputz-Installationsgerät (3), das einen Geräteeinsatz (7) und einen Abdeckrahmen (9) umfasst, und mit wenigstens einer Auflagefläche (4,10), die zur Auflage wenigstens eines Geräteeinsatzes (7) ausgebildet ist, wobei zwischen dem Geräteeinsatz (7) und der Auflagefläche (4) ein Dichtmittel (8) anordbar ist, das an den einsetzbaren Geräteeinsatz (7) und an die Auflagefläche (4) angepasst ist.

6. Aufputzgehäuse (1) nach Anspruch 5, **dadurch gekennzeichnet, dass** wenigstens eine Auflagefläche (4,10) zumindest teilweise entlang der Aufnahmeöffnung (2) angeordnet ist.

7. Aufputzgehäuse (1) nach Anspruch 5 oder 6, **gekennzeichnet, durch** eine doppelwandige Gehäuseausführung, wobei die Stirnfläche (6) der Gehäusedoppelwand (5) die Auflagefläche (4,10) bildet.

8. Aufputzgehäuse (1) nach einem der Ansprüche 5 bis 7, **dadurch gekennzeichnet, dass** wenigstens eine Auflagefläche von zumindest einem Steg gebildet ist.
